# EUROPEAN PATENT APPLICATION

(11) **EP 3 135 467 A1**
(43) Date of publication of application: **01.03.2017**
(21) Application number: 16185383.3
(22) Date of filing: 23.08.2016
(51) Int. Cl.: B29D 30/32

(54) **ROLL OVER CAN DRIVE APPARATUS OF TIRE BUILDING MACHINE**

(30) Priority: 24.08.2015 KR 20150118575
(71) Applicant: Hankook Tire Co., Ltd., Seoul 06133 (KR)
(72) Inventor: SON, Jung Woo, 34127 DAEJEON (KR)
(74) Representative: Intès, Didier Gérard André

(57) **Abstract**

The present invention discloses a roll over can drive device of a tire molding machine comprising: a bladder (104) which supplies air to an interior of a plurality of semi-finished products (102) located on a building drum (101) and turns up the semi-finished products (102) which are located on a bead (103) outside, and a roll over can (1) which pushes the bladder (104) to build a green tire, wherein the roll over can (1) rotates on an axis (3) of rotation of a support frame (2) by a cylinder (4), and wherein the cylinder (4) is connected to a support (5) of the rolls over can (1) and is mounted via a hinge axis (6) to a top of the support frame (2).

## Description

### BACKGROUND OF THE INVENTION

### 1. Field of the Invention

The present invention relates to a roll over can drive apparatus of a tire building machine supporting a bladder turning up a green tire semi-finished product on a building drum when the bladder is expanded in a green tire molding process, and more specifically, to a roll over can of the tire building machine in which an operation cycle time and failure rate are reduced by a simplified structure.

### 2. Description of the Related Art

In the tire building process, all tire semi-finished products constituting the tire are arranged or placed on the building drum in order. When the green tire is built in a tire building process like this, all kind of tire semi-finished products arranged on the building drum are pressed using a turn up bladder in order to make the green tire.

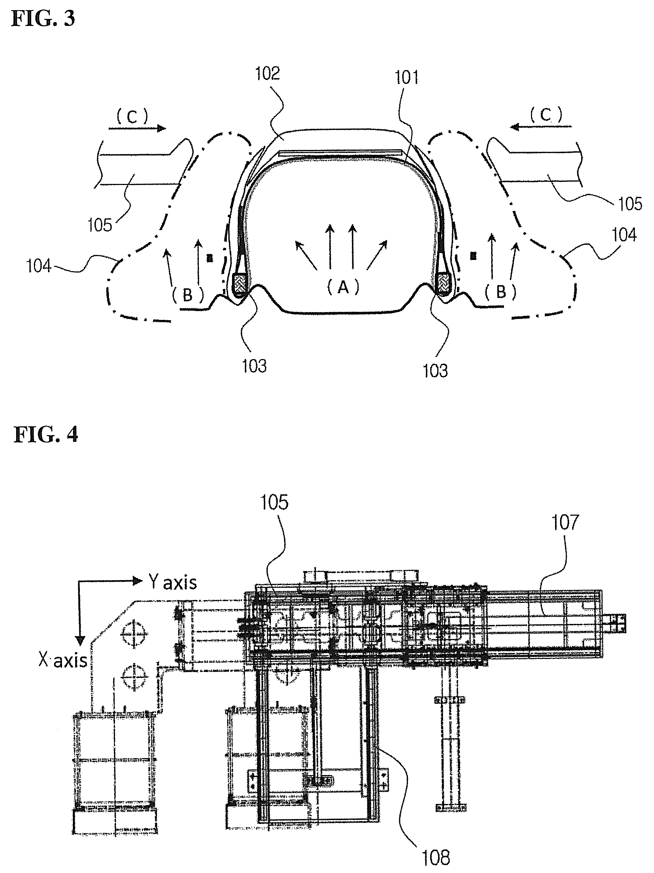

For example, as shown in Fig. 3, an air is supplied in an interior of the semi-finished product 102 such as a side wall, a carcass, etc. arranged on the building drum 101 in a direction of arrow A. At an outer bead portion 103, a bladder 104 is expanded by an air supplied in a direction of arrow B. If a roll over can 105 which is actuated into a direction of arrow C presses the bladder 104, the bladder 104 turns up the semi-finished product in order to build a tire.

As the conventional actuation of the roll over can 105 actuating as stated above is shown in Fig. 4, when the roll over can 105 comes close to the bladder 104 and pushes the bladder, the roll over can 105 is moved along a X-axis linear guide 107 and a Y-axis liner guide 108 by driving power of a motor.

At this time, if the roll over can 105 moves in the direction of X-axis, a great load on the Y-axis linear guide 108 will occur, therefore, the Y-axis linear guide 107 will be damaged and experience failure.

Also, since the roll over can 105 of the conventional roll over can drive apparatus is alternately moved forward and backward in the direction of the X-axis and the Y-axis, the actuating cycle time will be longer. Accordingly, there is a problem with a decrease in productivity, and there is also disadvantage in a layout of equipment taking up a large space.

### 3. Prior Art Documents

Korean Patent No. 101121010 (January 20, 2011)

### SUMMARY OF THE INVENTION

Thus, the present invention aims at solving the above-mentioned conventional problem, the object of the present invention is to provide a roll over can for building a tire wherein the operation load of the roll over can for turning up the bladder, the operation cycle time, and the layout space of equipment is decreased during the green tire building process.

In order to achieve the above-mentioned purpose, the present invention discloses a roll over can drive device of a tire molding machine comprising: a bladder which supplies air to an interior of a plurality of semi-finished products located on a building drum and turns up the semi-finished products which are located on a bead outside, and a roll over can which pushes the bladder to build a green tire, wherein the roll over can rotates on an axis of rotation of a support frame by a cylinder, and wherein the cylinder is connected to a support of the roll over can and is mounted via a hinge axis to a top of the support frame.

### BRIEF DESCRIPTION OF THE DRAWINGS

The above and other aspects, features and advantages of the invention will become apparent from the following detailed description in conjunction with the accompanying drawings, in which:
Fig. 1 is a front view of a roll over can drive device of a tire molding machine installed according to the present invention.
Fig. 2 is a side view of Fig. 1, showing the operating conditions of the tire molding machine.
Fig. 3 is a cross-sectional view of the schematically operating conditions showing processes for building a green tire according to the conventional tire molding machine.
Fig. 4 is a plan view showing the operating conditions of a roll over can drive device of the conventional tire molding machine.

### DETAILED DESCRIPTION OF THE EMBODIMENTS

Hereinafter, referring to the attached drawings, the preferred embodiment of the present invention is particularly illustrated, those skilled in the art will appreciate that the presently disclosed embodiments teach by way of example and not by limitation. Therefore, the matter contained in the above description or shown in the accompanying drawings should be interpreted as illustrative and not in a limiting sense.

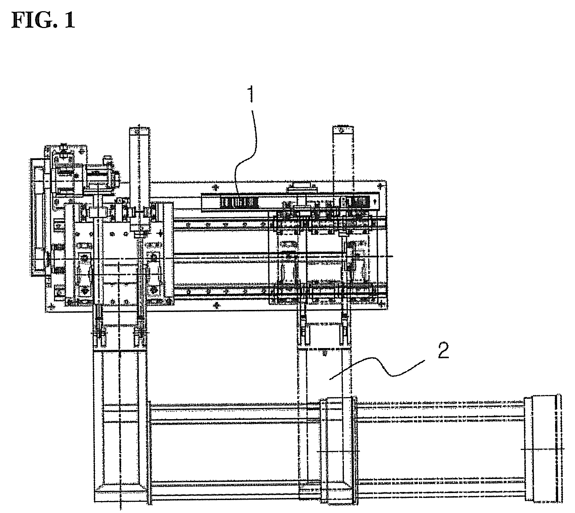

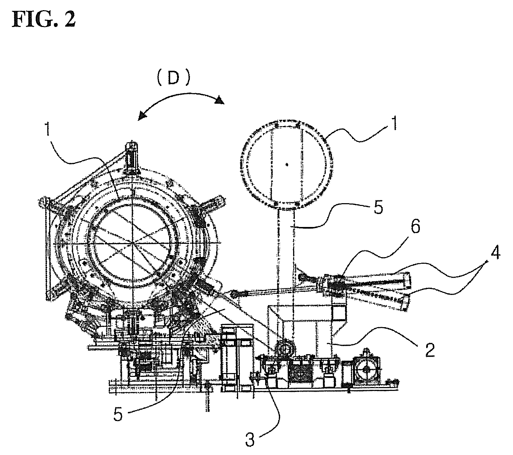

Figs. 1 and 2 are the front and side views of the roll over can drive device of the tire molding machine installed according to the present invention.

The present invention discloses a roll over can drive device of a tire molding machine comprising: a bladder 104 which supplies air to an interior of a plurality of semi-finished products 102 located on a building drum 101 and turns up the semi-finished products which are located on a bead 103 outside, and a roll over can 1 which pushes the bladder to build a green tire, wherein the roll over can 1 rotates on an axis 3 of rotation of a support frame 2 by a cylinder 4, and wherein the cylinder 4 which is connected to a support 5 of the roll over can 1 is mounted via a hinge axis 6 to a top of the support frame 2.

That is to say, as shown in Fig. 2, as the roll over can 1 rotates on the central axis 3 of rotation of the support frame 2 along the arrow D in a clockwise and counterclockwise direction, the roll over can 1 will push the bladder 104 and move to come into contact with the bladder, and vise versa the bladder 104 will be separate from the contact with the roll over can 1. Therefore, an approach and a separation between the roll over can 1 and the bladder 104 will occur.

A swing or rotation of the roll over can 1 like this can reduce the operation load more than the conventional equipment having a driving mechanism performing X-axis and Y-axis linear movement.

Furthermore, if the cylinder 4 by the swing of the roll over can 1 pushes the support 5 of the roll over can 1, the support 5 of the roll over can 1 will rotate on the axis 3 of rotation of the support frame 2, and then the cylinder 4 will be tilted around the hinge axis 6 at the top of the support frame 2. Therefore, the swing of pushing or pulling the support 5 of the roll over can 1 will occur.

As described above, the roll over can drive apparatus of the tire building machine according to the present invention changes the actuation structure of the roll over can operation from the conventional X-axis and Y-axis linear movement to a swing or rotation type movement of the roll over can, and the operation load of the roll over can for turning up the bladder is reduced more than the conventional X-axis and Y-axis linear movement, therefore, the equipment failure rate will be decreased from the simplified structure, the reduction of the operation cycle time will increase the productivity, and the layout space of equipment will be reduced during the green tire building process.

In the roll over can drive device of the tire molding machine according to the present invention, when the roll over can drive device approaches to the bladder and the roll over can drive device separates from the bladder, the roll over can drive device swing at the frame by the cylinder. Therefore, the present invention has effect as compared with the conventional X-axis and Y-axis linear movement that the operation load of the roll over can for turning up the bladder and the equipment failure rate will be decreased from the simplified structure, and also the operation cycle time and the layout space of equipment will be reduced during the green tire building process.

## Claims

1. A roll over can drive device of a tire molding machine comprising: a bladder (104) which supplies air to an interior of a plurality of semi-finished products (102) located on a building drum (101) and turns up the semi-finished products (102) which are located on a bead (103) outside, and a roll over can (1) which pushes the bladder (104) to build a green tire,
wherein the roll over can (1) rotates on an axis (3) of rotation of a support frame (2) by a cylinder (4), and wherein the cylinder (4) is connected to a support (5) of the roll over can (1) and is mounted via a hinge axis (6) to a top of the support frame (2).

2. The roll over can drive device of a tire molding machine as claimed in claim 1,
wherein the cylinder (4) is tilted around the hinge axis (6) of the support frame (2).
